(19) Europäisches Patentamt
European Patent Office
Office européen des brevets

(11) EP 2 177 839 A2

(12) **EUROPÄISCHE PATENTANMELDUNG**

(43) Veröffentlichungstag:
21.04.2010  Patentblatt 2010/16

(51) Int Cl.:
*F24D 17/00* (2006.01)   *F24H 7/04* (2006.01)
*F28D 20/02* (2006.01)

(21) Anmeldenummer: 09012193.0

(22) Anmeldetag: 25.09.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR
Benannte Erstreckungsstaaten:
AL BA RS

(30) Priorität: 26.09.2008  DE 102008049131

(71) Anmelder: STIEBEL ELTRON GmbH & Co. KG
37601 Holzminden (DE)

(72) Erfinder:
• Nolte, Ralf-Rainer
37671 Höxter (DE)
• Rüdingloh, Dennis
59556 Lippstadt (DE)

(54) **Verbundheizkörper**

(57)    Die vorliegende Erfindung betrifft eine Heizvorrichtung zum Erwärmen einer Nutzflüssigkeit, insbesondere Wasser, mit wenigstens einem Heizkörper (1). Die Erfindung betrifft weiterhin einen Warmwasserbereiter mit einem Wasserbehälter zum Aufnehmen zu erwärmenden und/oder warmzuhaltenden Wassers und einer Heizvorrichtung. Außerdem betrifft die Erfindung einen Verbindungsflansch zur Verwendung mit einer Heizvorrichtung sowie ein Verfahren zum Herstellen einer Heizvorrichtung.

Figur 14

EP 2 177 839 A2

**Beschreibung**

Die vorliegende Erfindung betrifft eine Heizvorrichtung zum Erwärmen einer Nutzflüssigkeit wie Wasser. Weiterhin betrifft die vorliegende Erfindung einen Warmwasserbereiter mit einem Wasserbehälter zum Aufnehmen zu erwärmenden und/oder warmzuhaltenden Wassers. Weiterhin betrifft die Erfindung einen Verbindungsflansch zur Verbindung mit einer Heizvorrichtung und sie betrifft ein Verfahren zum Herstellen einer Heizvorrichtung.

Mittels Latentwärmespeichermedien, insbesondere sogenannter Phasenwechselmaterialien bzw. PCM (phase-change material) lässt sich grundsätzlich die Wärmekapazität eines Warmwasserspeichers erhöhen.

Phasenwechselmaterialien zur Speicherung thermischer Energie zeichnen sich dadurch aus, dass ihre Temperatur bei Wärmezufuhr bzw. Wärmeentzug im Bereich der sogenannten Phasenwechseltemperatur so lange im Wesentlichen konstant bleibt, bis das Material vollständig in die jeweils andere Phase umgewandelt ist. Die während der Phasenumwandlung zugeführte bzw. entnommene Wärme, die zu keiner Temperaturänderung des Mediums führt, wird als latente Wärme oder Umwandlungsenthalpie bezeichnet. Der Anteil der Energie, der zu einer Temperaturänderung des Materials führt, wird als fühlbare oder sensible Wärme bezeichnet. Die Vorteile der latenten Wärmespeicherung liegen vor allem darin, dass sich bereits durch geringe Temperaturänderungen große Wärmemengen speichern und dadurch Wärmeverluste reduzieren lassen. Gegenüber den anderen Speicherarten, insbesondere der sensiblen Speicherung, können durch die Speicherung im Phasenwechsel kleinere Volumina der Nutzflüssigkeit oder des zu speichernden Mediums erzielt werden. Dadurch, dass die Temperatur im Bereich des Phasenwechsels für einen längeren Zeitraum annähernd konstant ist, lassen sich Temperaturschwankungen glätten.

Nachteilig ist die üblicherweise sehr geringe thermische Leitfähigkeit bei Phasenwechselmaterialien. Dadurch verläuft die Be- und Entladung von bekannten Latentwärmespeichem relativ langsam.

Bekannte Warmwasserspeicher bzw. Warmwasserbereiter versuchen das Problem dadurch zu lösen, dass viele mit Phasenwechseimatenat gefüllte Beutel in einem mit einer Flüssigkeit gefüllten Behälter vorgesehen sind, so dass ein Wärmetausch zwischen den Beuteln und der Flüssigkeit begünstigt wird.

Die Verwendung solcher Beutel führt dazu, dass diese in dem Behälter nach oben aufschwimmen können und dort dicht beieinander liegen, wodurch der Wärmeübergang sich wiederum zu der umgebenden Flüssigkeit verschlechtert. Zudem ist die bereits aktuelle Anordnung in dem Behälter nicht genau vorhersehbar und damit können auch die Eigenschaften dieser Vorrichtung stark variieren.

Gemäß anderer Vorschläge wird ein thermisch gut leitfähiges Material wie z. B. eine Graphitfolie in einen mit einem Phasenwechselmaterial gefüllten Behälter eingesetzt. Dieses thermisch leitfähige Material wird dann aus dem Behälter herausgeführt und weist eine wärmeleitende Verbindung zu einer Wärmeaustauschobeffläche auf, wie beispielsweise einer Wand eines Rohres, wobei durch besagtes Rohr ein Wärmeübertragungsmedium strömt.

Die Verwendung eines solchen leitfähigen Materials mit zusätzlichem Wärmetauscher über ein extra Rohr oder dergleichen ist konstruktiv aufwändig. Zudem ist auch hierbei mit einem schlechten Wärmeübergang von dem Phasenwechselmaterial zu der Wärmetauschflüssigkeit zu rechnen.

Der vorliegenden Erfindung liegt somit die Aufgabe zugrunde, zumindest einen der genannten Nachteile jedenfalls teilweise zu verbessern. Insbesondere soll eine möglichst einfach und kostengünstig umsetzbare Lösung mit möglichst guten Wärmeübergangseigenschaften geschaffen werden.

Erfindungsgemäß wird eine Heizvorrichtung gemäß Anspruch 1 vorgeschlagen.

Eine solche Heizvorrichtung zum Erwärmen einer Flüssigkeit wie Wasser hat somit einen Heizkörper, der eine geschlossene, flüssigkeitsdichte Helzkörperhülle aufweist. In der Heizkörperhülle ist das Latentwärmespeichermedium zwischen der ersten und zweiten Außenschicht aufgenommen. Die erste und zweite Außenschicht weist eine erste bzw. zweite Hüllenoberfläche auf, die mit der Nutzflüssigkeit in Kontakt kommen soll, um insbesondere über Wärmeleitung einen Wärmeaustausch zwischen dem Heizkörper und der Nutzflüssigkeit zu schaffen. Der Heizkörper ist somit derart ausgestaltet, dass Nutzflüssigkeit mit diesen beiden Hüllenoberflächen möglichst großflächig in Kontakt kommen kann, um einen möglichst guten Wärmeaustausch zu erreichen.

Die Heizitörperhülle kann beispielsweise aus einer Schlauchfolie gefertigt sein. Wird diese Schlauchfolie flach mit zwei Seiten angeordnet, kann eine Seite die erste Außenschicht und die andere Seite die zweite Außenschicht bilden.

Es wird somit eine Heizvorrichtung mit einem Heizkörper vorgeschlagen, der das Latentwärmespeichermedium beinhaltet und selbst unmittelbar in Kontakt zu bringen ist mit der zu erwärmenden Nutzflüssigkeit. Ein solcher Heizkörper wird auch als Verbundheizkörper bezeichnet.

Vorzugsweise wird eine Heizvorrichtung vorgeschlagen, die dadurch gekennzeichnet ist, dass der wenigstens eine Heizkörper als flaches Element, insbesondere als Heizkörperfolie ausgeführt ist und/oder die erste und zweite Hüllenoberfläche einen mittleren Abstand zueinander aufweisen und die Quadratwurzel der Größe der ersten und/oder der zweiten Hüllenoberfläche des Heizkörpers wenigstens doppelt so groß, insbesondere wenigstens fünfmal so groß, weiter vorzugsweise wenigstens zwanzigmal so groß ist wie der mittlere Abstand der ersten und zweiten Hüllenoberfläche.

Demnach wird ein Heizkörper vorgeschlagen, der als flaches Element, insbesondere als Heizkörperfolie ausgeführt ist. Hierdurch wird eine große Oberfläche des Heizkörpers, gemessen an seinem Volumen, erreicht, um möglichst gute Wärmeübertragungseigenschaften zu erzielen. Dabei ist unter einem flachen Element zu verstehen, dass der Abstand zwischen den beiden Außenschichten, insbesondere ein mittlerer Abstand - wenn der Abstand jeweils variiert - im Vergleich zur Abmessung der Ausdehnung der Hüllenoberfläche klein ist, insbesondere bezogen auf zwei Richtungen. Die Charakterisierung als flaches Element soll insbesondere keine Einschränkung des Heizkörpers auf eine Ausgestaltung im Sinne eines platten Elementes wie einer platten Scheibe haben. Vielmehr kann das flache Element gewölbt sein oder zu einem Zylindermantel oder vieler anderer Formen geformt sein. Eine solche Form kann vorgegeben sein oder insbesondere bei Verwendung einer Heizkörperfolie im Wesentlichen beliebig geformt werden.

Von einer flachen Ausgestaltung ist insbesondere dann auszugehen, wenn die Quadratwurzel der Größe der ersten und/oder der zweiten Hüllenoberfläche zumindest doppelt so groß ist wie der mittlere Abstand der ersten und zweiten Hüllenoberfläche. Veranschaulichend bedeutet dies, dass bei einer quadratischen Oberfläche jede Kantenlänge wenigstens doppelt so groß ist wie die Dicke. Vorzugsweise ist die besagte Quadratwurzel mindestens fünfmal, weiter vorzugsweise zumindest zwanzigmal so groß wie der mittlere Abstand der ersten und zweiten Hüllenoberfläche. An dem oben genannten Beispiel einer quadratischen Oberfläche bedeutet dies, dass die Kantenlänge zumindest fünfmal bzw. zwanzigmal so groß ist wie die Dicke. Es ist zu beachten, dass die erste und zweite Hüllenoberfläche im Grunde die gleiche Größe und im Übrigen auch Form aufweisen sollten, da sie das Latentwärmespeichermedium zwischen sich aufnehmen. In einem Beispiel weist eine der beiden Oberflächen Abmessungen von etwa 50 cm X 2 m auf, wobei die Dicke, also der mittlere Abstand zwischen der ersten und zweiten Hüllenoberfläche etwa 5 mm beträgt. In diesem Fall wäre das Verhältnis der Quadratwurzel zum mittleren Abstand sogar 200. In einem anderen Beispiel kann die Dicke 10 mm betragen.

Gemäß einer weiteren Ausführungsform wird vorgeschlagen, dass mehrere Heizkörper und/oder mehrere Heizkörperabschnitte so zueinander angeordnet sind, dass sie wenigstens einen Zwischenraum ausbilden, um der Nutzflüssigkeit insbesondere Wasser zu ermöglichen, durch diesen wenigstens einen Zwischenraum hindurchzuströmen. Gemäß diesem Vorschlag soll zumindest gemäß einer Ausgestaltung die Heizvorrichtung möglichst viel Heizkörperoberfläche auf kompaktem Raum schaffen, um möglichst gute Wärmeübertragungseigenschaften zu erreichen. Hierzu werden mehrere, vorzugsweise viele Heizkörperoberflächen benachbart zueinander vorgesehen, wobei zwischen zwei Heizkörperoberflächen entweder das Latentwärmespeichermedium angeordnet ist oder ein Zwischenraum zum Durchströmen der Nutzflüssigkeit vorhanden ist. Hierzu kann ein Heizkörper entsprechend geformt werden, so dass er selbst solche Zwischenräume schafft oder es können mehrere Heizkörper vorgesehen und entsprechend zueinander angeordnet sein.

Dabei schlägt eine Ausgestaltung vor, dass wenigstens ein Heizkörper um eine Längsachse in eine Rollenform mit mehreren Wicklungen gewickelt ist, wobei die einzelnen Wicklungen als zueinander beabstandete Lagen ausgebildet sind, so dass der Nutzflüssigkeit insbesondere Wasser ermöglicht wird, zwischen den Lagen zu strömen. In einer Querschnittansicht quer zur Längsachse bzw. einer entsprechenden stirnseitigen Ansicht ergibt sich für den Heizkörper im Wesentlichen eine Spiral- oder Schneckenform, wobei sowohl der Heizkörper als solcher als auch der Zwischenraum eine Spiral- bzw. Schneckenform aufweist. Damit kann auf einfache Weise ein Raum zum Aufnehmen einer Nutzflüssigkeit wie Wasser, insbesondere ein im Wesentlichen zylindrischer Raum, zu einem Großteil wie beispielsweise zu 50 % mit einem Heizkörper mit einem Latentwärmespeichermedium versehen werden und dabei eine sehr hohe Oberfläche zum Wärmeaustausch aufweisen. Beispielsweise braucht nur eine lange Heizkörperfolie verwendet und zusammen mit Abstandshaltem zu einer beschriebenen Rolle aufgerollt zu werden.

Eine weitere Ausführungsform schlägt vor, mehrere, rohrförmige Heizkörper zu verwenden, die so ineinander gesetzt sind, dass der Nutzflüssigkeit ermöglicht wird, zwischen den Heizkörpern zu strömen. In einem Beispiel könnten diese Heizkörper als Zylindermäntel von Zylindern mit unterschiedlichen Durchmessern ausgeformt sein und konzentrisch zueinander angeordnet werden. Die zylindrische Form ist günstig aber nicht zwingend. Beispielsweise kann die Form auch von der Form des auszufüllenden Raums eines Gefäßes abhängen.

Dies sind nur einige Beispiele für die Form des bzw. der Heizkörper. Eine Vielzahl anderer Varianten kommt in Betracht wie beispielsweise eine harfenförmige Form, das planparallele Anordnen mehrerer Heizkörper zueinander, das Formen eines Heizkörpers in einer Mäanderform oder auch beliebige Kombinationen davon, wie beispielsweise das Einsetzen einer "Schneckenform" in einen rohrförmigen Heizkörper. Entscheidend ist, dass Zwischenräume - möglichst gleicher Stärke - geschaffen werden, so dass die Nutzflüssigkeit an den Oberflächen entlang strömen kann.

Vorzugsweise weist die erste und/oder die zweite Außenschicht Kunststoff auf, und ist insbesondere vollständig aus Kunststoff gefertigt. Vorzugsweise ist somit die Heizkörperhülle im Wesentlichen aus Kunststoff gefertigt. Kunststoff ist oftmals ein kostengünstiger, langlebiger und mitunter einfach zu verarbeitender Werkstoff. Gegenüber Materialien wie Metall weist Kunststoff jedoch üblicherweise schlechte Wärmeübertragungseigenschaften (Wärmeleitfähigkeit) auf. Durch die erfindungsgemäße Schaffung direkter Kontaktflächen zur Nutzflüssigkeit, insbesondere durch Schaffung großer Kontaktflächen zur Nutzflüssigkeit kann dies hingenommen werden und Vorzüge des Kunststoffs sind dadurch ausnutzbar geworden. Insbesondere zum Fertigen einer Heizkörperfolie ist Kunststoff bevorzugt zu verwenden.

Gemäß einer Ausführungsform weist das Latentwärmespeichermedium Paraffin auf bzw. ist es im Wesentlichen Paraffin.

Paraffine sind organische Latentwärmemäterialien bzw. Latentwärmespeichermaterialien. Ihre Dichte liegt zwischen 0,7 und 0,9 kg/l.

Paraffine sind zyklenstabil und nichttoxisch, zudem zeigen sie im Vergleich zu Phasenwechselmaterialien auf Salzhydratbasis praktisch keinerlei Korrosionserscheinungen z. B. an Metallen. Die wesentlichen Nachteile von Paraffinen wären die geringe thermische Leitfähigkeit (etwa 0,2 W/mK) sowie die vergleichsweise geringe Schmelzwärme. Durch die erfindungsgemäße Lösung, zumindest gemäß einer der beschriebenen Ausführungsformen, kann Paraffin dennoch für eine Heizvorrichtung nutzbar gemacht werden und die Vorzüge genutzt werden.

Eine weitere Ausgestaltung wird vorgeschlagen, bei der die Heizvorrichtung dadurch gekennzeichnet ist, dass das Latentwärmespeichermedium mit Materialien mit guter thermischer Leitfähigkeit versetzt ist, vorzugsweise mit einem Metall versetzt ist, insbesondere mit Metallpulver wie Kupferpulver. Ein solches Material kann als Pulver oder mit feinen Stücken in das Latentwärmespeichermedium eingestreut sein. Die Eigenschaften des Latentwärmespeichermediums bleiben hierdurch im Wesentlichen unbeeinflusst, wobei jedoch die thermische Leitfähigkeit des Latentwärmespeichermediums erhöht werden kann. Das Latentwärmespeichermedium kann hierdurch Wärme schneller abgeben und/oder schneller aufnehmen.

Günstig ist es, wenn die Heizkörperhülle in mehrere, jeweils einen Teil des Latentwärmespeichermediums aufnehmende Kammern unterteilt ist. Solche Kammern können auch waben- oder mäanderförmig sein. Durch Kammern wird insbesondere bei einer vertikalen Anordnung der Heizkörperhülle oder eines Teils davon verhindert, dass das Latentwärmespeichermedium, jedenfalls wenn es sich im flüssigen Zustand befindet, nach unten sinkt und zu einer ungleichmäßigen Verteilung führt. Eine solche ungleichmäßige Verteilung kann die Lebensdauer des Heizkörpers beeinträchtigen und zu einer schlechten Wärmeübertragung des Heizkörpers insgesamt führen. Durch Materialanhäufungen wäre der Wärmeübergang schlechter, es könnte zu lokalen Überhitzungen kommen. Günstig ist es, eine oder mehrere Schweißnähte zu verwenden, die die erste und zweite Außenschicht im Bereich der Schweißnähte miteinander verbindet, die erste und zweite Außenschicht also entlang der Schweißnähte miteinander verschweißt. Eine solche Verschweißung ist auf einfache Weise vorzunehmen und bietet sich gerade bei der Verwendung von Kunststoff für die Heizkörperhülle an.

Gemäß einer weiteren Ausgestaltung wird vorgeschlagen, dass das wenigstens eine Primärheizelement Aussparungen, insbesondere Löcher aufweist, und die erste und die zweite Außenschicht durch diese Aussparungen hindurch miteinander verschweißt sind. Hierdurch wird erreicht, die erste und zweite Außenschicht miteinander zu verschweißen, obwohl zwischen ihnen ein Primärheizelement angeordnet ist. Es ist grundsätzlich problematisch, eine Verschweißung mit dem Primärheizelement vorzunehmen. Die vorgeschlagene Ausführungsform findet hierzu eine Lösung. Dabei ist zu beachten, dass mitunter keine vollständig flüssigkeitsdichte Barriere durch eine solche Schweißnaht erreicht werden kann, da die erste und die zweite Außenschicht nur im Bereich der Aussparungen miteinander verschweißt sind. Es hat sich aber herausgestellt, dass eine solche Verschweißung ausreichend ist, um das Latentwärmespeichermedium in den jeweiligen Kammern zu halten.

Vorzugsweise wird als Primärheizelement ein elektrisches Heizelement, insbesondere eine elektrische Heizfolie verwendet. Eine solche elektrische Heizfolie ist flexibel in der Anwendung und kann auf einfache Weise integriert werden. Eine solche Heizvorrichtung kann beispielsweise auch unter Ausnutzung von sogenanntem "Nachtstrom" eingesetzt werden, indem eine Zufuhr elektrischer Wärme soweit möglich nur dann vorgenommen wird, wenn der elektrische Strom vergleichsweise preisgünstig ist. Natürlich kommen auch andere Primärheizelemente in Betracht wie beispielsweise ein mit einer Wärmeflüssigkeit, wie heißem Wasser, durchströmter Heizkörper.

Eine weitere Ausführungsform sieht vor, dass das Primärheizelement in der Heizkörperhülle in wenigstens einer separaten Kammer aufgenommen ist, und/oder im bestimmungsgemäßen Gebrauch in unmittelbarem Kontakt mit dem Latentwärmespeichermedium steht. Dies sind zwei alternative Ausführungsformen, die gleichwohl kombiniert werden können. Durch Verwendung einer separaten Kammer für das Primärheizelement wird ein großer Gestaltungsspielraum für die Kammer für das Latentwärmespeichermedium geschaffen. Das gleiche gilt für die Möglichkeiten der Anordnung und Ausgestaltung des Primärheizelementes. Dieses kann beispielsweise großflächig mit der Heizkörperhülle, benachbart zu einer Kammer für das Latentwärmespeichermedium verklebt werden. Als Schutz vor einem unmittelbaren Kontakt mit der Nutzflüssigkeit wird das Primärheizelement in einer separaten Kammer eingeschlossen. Eine wie oben beschriebene weitere Unterteilung der Kammer ist für das Primärheizelement nicht erforderlich. In einer Variante wird je eine geschlossene Hülle für das Latentwärmespeichermedium und den Primärheizkörper vorgesehen und diese beiden Hüllen zu einem Heizkörper verklebt oder verschweißt.

Wird das Primärheizelement so angeordnet, dass es in unmittelbarem Kontakt mit dem Latentwärmespeichermedium steht, so ergeben sich äußerst günstige Wärmeübertragungseigenschaften für Wärme von dem Primärheizelement zum Latentwärmespeichermedium. Zudem braucht nur eine Kammer in der Heizkörperhülle vorgesehen zu sein, in der sowohl das Primärhteizelement als auch das Latentwärmespeichermedium aufgenommen werden. Eine etwaige - im Herstellungsverfahren spätere - Unterteilung dieser gemeinsamen Kammer in Unterkammern zum Vermeiden einer ungleichmäßigen Verteilung des Latentwärmespeichermediums kann dennoch - wie beispielsweise oben ausgeführt - vorgenommen werden.

Eine noch weitere Ausführungsform schlägt eine Heizvorrichtung vor, die einen Flansch zum Befestigen des wenigstens einen Heizkörpers aufweist, wobei der Flansch wenigstens ein Anschlussmittel aufweist zum funktionalen Verbinden des Primärheizeiementes mit einer Energieversorgung, insbesondere einer elektrischen Energiequelle, und wobei der Flansch wenigstens ein Befestigungsmittel aufweist zum Befestigen der Heizvorrichtung mit einem Wasserbehälter.

Ein solcher Wasserbehälter kann die Nutzflüssigkeit, nämlich insbesondere das Wasser aufnehmen. Die Heizvorrichtung kann dann in diesen Wasserbehälter eingebracht werden und wird - von innen - mittels des Flansches gehalten. Neben einer Befestigung benötigt der Flansch auch einen Durchgang bzw. Anschluss zum Zuführen von Energie zu dem Primärheizelement. Bei Verwendung eines elektrischen Primärheizelementes wird somit ein Anschluss zu einer elektrischen Energieversorgung vorgesehen.

Vorzugsweise wird die Heizkörperhülle zumindest teilweise in längliche, insbesondere röhrenförmige Abschnitte zum Aufnehmen von Phasenwechselmaterial wie Paraffin unterteilt. Eingefülltes Phasenwechselmaterial wird somit im Wesentlichen in mehreren, insbesondere parallel zueinander angeordneten röhrenähnlichen Aufnahmeräumen aufgenommen, wobei diese länglichen Aufnahmeräume im Wesentlichen ähnlich mehrerer Röhren parallel zueinander angeordnet sind und bei einem bestimmungsgemäßen Einbau der Heizvorrichtung im Wesentlichen senkrecht angeordnet sind. Durch diese längliche bzw. Röhrchenform wird vermieden, dass das Phasenwechselmaterial sich in vertikaler Richtung bewegt und zu einer großen Matehalaiisammlung in einem Bereich führt. Zudem ist durch die Verwendung solcher länglicher, röhrenförmiger Aufnahmeabschnitte mit einem Kapillareffekt zu rechnen.

Zur Herstellung solcher länglicher Aufnahmebereiche in der Heizkörperhülle werden im Wesentlichen parallele Schweißnähte gesetzt, die zwei benachbarte Schichten, insbesondere zwei benachbarte Folien miteinander verschweißen. Hierdurch entstehen zunächst flache, längliche Taschenabschnitte, deren innere Breite, also der Abstand zweier solcher Schweißnähte im Bereich von ca. 10 bis 50 mm, vorzugsweise 20 bis 40 mm und insbesondere im Bereich von 30 mm liegt. Entscheidend für die Größe ist zwar die innere Abmessung, jedoch werden vorzugsweise Nähte vorgesehen, die im Verhältnis zur Taschenbreite schmal sind, so dass die genannten Taschenbreiten im Grunde den Abständen der Schweißnähte entsprechen.

Durch ein Befüllen dieser länglichen Aufnahmeabschnitte nehmen diese im Wesentlichen eine Röhrenform bzw. Röhrchenform an. Die genannten Abmessungen, die zu entsprechenden Röhrchengrößen beim Befüllen führen, haben sich als vorteilhaft erwiesen und gute Eigenschaften in Bezug auf eine Kapillar wirkung gezeigt.

Wenigstens eine Ausführungsform bezieht sich auf die Verkapselung und damit das auslaufsichere Einbringen von Phasenwechselmaterial in einen Folienbeutel, um das Phasenwechselmaterial in Trinkwarmwasserspeichem einsetzen zu können.

Es ist zu beachten, dass Phasenwechselmaterial auf der Basis von Paraffin für den Einsatz in Trinkwarmwasserspeichem mit einer Hülle versehen werden muss, um ein Auslaufen des Materials im flüssigen Zustand zu verhindern, ohne dabei die Eigenschaften des Materials als Wärmespeichermedium zu beeinflussen bzw. in zu starkem Maß zu beeinflussen. In manchen Ausführungsformen ist jedoch das Einbringen von Paraffin in großflächigen und vertikal in einen Speicher eingebrachten Beuteln aufgrund des Fließverhaltens des Paraffins in der Schmelzphase nicht möglich. Daher wurden Möglichkeiten untersucht, um das Fließen des flüssigen Paraffins zu reduzieren, es aber dennoch großflächig einbringen zu können. Die Nutzung des Kapillareffektes in schmalen Röhrchen stellt hierfür eine erfolgversprechende Variante dar. Das Prinzip der Kapillarität beruht darauf, dass Flüssigkeit die Oberfläche von ausreichend schmalen Behältern (Röhrchen, Spalten, Hohlräumen) benetzt und durch Adhäsionskräfte nach oben steigt.

Das verwendete Folienmaterial soll einen direkten Kontakt mit Trinkwasser, ermöglichen. Es muss eine Temperaturbeständigkeit von bis zu 95°C aufweisen, sowie langzeit- und zyklenstabil sein. Das Folienmaterial muss ausreichend verformbar sein, um eine Volumenausdehnung des Phasenwechselmaterials in der Schmelzphase zu ermöglichen. Es darf allerdings nicht zu flexibel sein, um eine Kapillarwirkung zu gewährleisten. In Versuchen wurde temperaturbeständige PE-Folie mit einer Folienstärke von 70 $\mu$m eingesetzt und hat sich dabei als geeignet erwiesen.

Für die Herstellung wird ein spezielles Folienschweißgerät dazu eingesetzt, einen Folienschlauch mit Schweißnähten zu versehen. Dadurch werden Hohlkammern mit gleichmäßigen Abständen erzeugt, in die das Paraffin eingefüllt werden kann. In ersten Versuchsreihen haben sich Hohlkammerbreiten von bis zu 30 mm als sinnvoll erwiesen, um einen Kapillareffekt nutzen zu können.

Vorzugsweise umfasst ein solcher Verbindungsflansch wenigstens ein Aufnahmemittel zum Aufnehmen des wenigstens einen Heizkörpers, einen funktionalen Anschluss, insbesondere elektrischen Anschluss zum Verbinden des Primärheizelementes mit einer Energiequelle, und wenigstens ein Befestigungsmittel zum Befestigen mit einem Warmwasserbehälter.

Zum Herstellen einer Heizvorrichtung werden gemäß einer Ausführungsform zumindest die folgenden Schritte vorgeschlagen:

- Bereitstellen einer flüssigkeitsdichten, flachen Heizkörperhülle,

- Einfüllen eines. Latentwärmespeichermediums in eine Kammer der Heizkörperhülle,

- Verschließen der Kammer der Heizkörperhülle und

- flächiges Verbinden einer Seite der Kammer der Heizkörperhülle mit einem Primärheizelement.

Somit wird ein Heizkörper hergestellt, der in einer Kammer das Latentwärmespeichermedium ohne Primärheizelement aufnimmt. Das Primärheizelement wird an einer Seite der Kammer mit dem Latentwärmespeichermedium flächig angeordnet, gegebenenfalls in einer eigenen Hülle, insbesondere verklebt. Das Primärheizelement steht somit in dieser Ausführungsform nicht in unmittelbarem Kontakt mit dem Latentwärmespeichermedium. Eine Variante dieses Herstellungsverfahrens umfasst die folgenden Schritte: Als Ausgangsmaterial für die Heizkörperhülle kann ein Folienmaterial in Schlauchform verwendet werden. Dieses ist auf Länge zuzuschneiden und es werden bereits horizontale Bahnen eingeschweißt, die bei bestimmungsgemäßer Verwendung etwa horizontal verlaufen. Bei der Herstellung bedeutet das, dass die Bahnen in Richtung des Schlauches verlaufen und in diese Richtung entsprechende Schweißnähte angeordnet werden. Im nächsten Schritt wird eine der beiden Stirnseiten des Folienschlauchs zugeschweißt. Anschließend erfolgt das Einfüllen des Phasenwechselmaterials wie beispielsweise Paraffin im Schmelzzustand in die jeweiligen Bahnen, also Kammern. Anschließend wird die Schlauchfolie evakuiert, so dass Luft entnommen wird und im Wesentlichen nur das Phasenwechselmaterial verbleibt. Die zweite Stirnseite wird dann zugeschweißt und es entsteht eine geschlossene Heizkörperhülle mit darin in mehreren Kammern enthaltenem Phasenwechselmaterial.

Anschließend wird als Primärheizelement ein Flächenheizelement bereitgestellt und mit elektrischen Kontakten versehen. Dieses wird gegebenenfalls in einer eigenen Hülle durch Kleben mit der mit dem Phasenwechselmaterial gefüllten Heizkörperhülle verbunden. Das so entstandene Verbundsystem wird durch eine Drahtmatrix (-geflecht) fixiert. Dieses Verbundsystem wird in einem Beispiel zu einer Rolle gerollt, wobei Abstände zwischen den einzelnen entstehenden Lagen vorgesehen sind. Schließlich erfolgt eine Fixierung mit einem sogenannten Deckel- und Fußflansch zur Formhaltung. Somit wird an einer Stirnseite ein Deckelflansch und an einer anderen Stirnseite ein Fußflansch angeordnet, um die besagte Rollen- oder Spiralform beizubehalten. Schließlich kann eine Isolierung der Versorgungsleitungen des Heizelementes vorgenommen werden und die Heizvorrichtung ist im Wesentlichen fertig und kann in einen Behälter, insbesondere Warmwasserbehälter eines Warmwasserbereiters eingebracht werden.

Gemäß einer anderen Ausführungsform wird ein Verfahren zum Herstellen einer Heizvorrichtung vorgeschlagen, das die folgenden Schritte umfasst:

- Bereitstellen einer flüssigkeitsdichten, flachen Heizkörperhülle mit einer ersten und einer zweiten Außenschicht,

- Einsetzen eines Primärheizelementes in die Heizkörperhülle zwischen die erste und zweite Außenschicht,

- Einfüllen eines Latentwärmespeichermediums in die Heizkörperhülle zwischen die erste und zweite Außenhülle in unmittelbarem Kontakt mit dem Primärheizelement, insbesondere beidseitig von dem Primärheizelement und

- Verschließen der Heizkörperhülle, wobei Anschlüsse zum Primärheizelement herausgeführt sind.

Gemäß diesem Verfahren wird somit ein Heizkörper hergestellt, bei dem das Primärheizelement und das Latentwärmespeichermedium unmittelbar in einer Kammer bzw. Tasche der Heizkörperhülle aufgenommen sind. Das Primärheizelement steht dabei in unmittelbarem Kontakt mit dem Latentwärmespeichermedium.

Gemäß einer Ausführungsform wird vorgeschlagen, die folgenden konkreten Schritte zum Herstellen zu verwenden:

Auch diese Ausführungsform geht von einem Folienmaterial in Schlauchform aus, das im Grunde auf Länge zugeschnitten wird. Als Weiteres wird zunächst als Primärheizelement ein perforiertes Flächenheizelement mit Kabelkontakten versehen und anschließend in die Schlauchfolie eingebracht. Es werden nun horizontale Schweißbahnen, also horizontale Kammern durch entsprechende Schweißnähte in Längsrichtung des Folienschlauches erzeugt. Anschließend wird eine Stirnseite des Folienschlauches zugeschweißt und anschließend das Latentwärmespeichermedium, insbesondere Paraffin im Schmelzzustand in die Bahnen bzw. horizontalen Kammern und damit unmittelbar benachbart zu dem Primärheizelement und in Kontakt mit diesem eingefüllt. Durch die Perforation in dem Primärheizelement war möglich, besagte parallele Bahnen bzw. Kammern vorzusehen und das Latentwärmespeichemedium kann sich hierdurch auch auf beide Seiten des Primärheizelementes verteilen.

Die Schlauchfolie bzw. die Heizkörperhülle wird dann evakuiert und durch Verschweißen der zweiten Stirnseite verschlossen. Das Fixieren, in Form Bringen und Anordnen von Deckel- und Fußflansch zur Formhaltung sowie Isolierung der Versorgungskabel und Einbringen in einen Behälter kann wie beim oben beschriebenen Ausführungsbeispiel erfolgen.

Dieses zweite detailliert dargestellte Verfahren schafft somit einen Heizkörper, bei dem das Primärheizelement mit dem Latentwärmespeichermedium in unmittelbarem Kontakt steht.

Vorzugsweise wird eine erfindungsgemäße Heizvorrichtung in einem Warmwasserbereiter eingesetzt, der einen Wasserbehälter zum Aufnehmen zu wärmenden und/oder warm zu haltenden Wassers aufweist. Ein Gedanke ist, dass der Wasserbehälter bzw. Warmwasserspeicher Wasser und darin - nur durch eine dünne Folie getrennt - das PCM, insbesondere Paraffin enthalten ist. Das Wasser ist somit in engem Kontakt mit dem PCM.

Die Erfindung wird nachfolgend anhand einiger Ausführungsbeispiele unter Bezugnahme auf die begleitenden Figuren näher erläutert.

Figur 1      zeigt den schematischen Aufbau eines Heizkörpers gemäß einer ersten Ausführungsform in einer perspektivischen Ansicht.

Figur 2      zeigt den Aufbau des Heizkörpers gemäß Figur 1 in einer schematischen Seitenansicht.

Figur 3      zeigt einen Heizkörper gemäß einer zweiten Ausführungsform schematisch in einer perspektivischen Ansicht.

Figur 4      zeigt den Aufbau eines Heizkörpers gemäß Figur 3 schematisch in einer Seitenansicht.

Figur 5      zeigt schematisch eine mögliche Anordnung eines Heizkörpers in gerollter Form.

Figur 6      zeigt eine mögliche Anordnung eines Heizkörpers in einer rohrförmigen Ausgestaltung.

Figur 7      zeigt schematisch den Aufbau einer Heizfolie als Primärheizelement.

Figur 8      zeigt schematisch ein perforiertes Helzfolienmaterial mit Kupferleitbahnen zur Verwendung als Primärheizelement.

Figur 9      zeigt schematisch einen Heizkörper in einer Draufsicht.

Figur 10    zeigt einen Aufnahmeflansch zum Aufnehmen mehrerer im Wesentlichen rohrförmiger und konzentrischer Heizkörper in einer perspektivischen Darstellung.

Figur 11    zeigt einen Aufnahmeflansch gemäß Figur 10 in einer Draufsicht.

Figur 12    zeigt einen Verbindungsflansch zum Verbinden eines Heizkörpers an einen Warmwasserbehälter.

Figur 13    zeigt eine Heizvorrichtung mit Heizkörper und Aufnahmeflansch und Verbindungsflansch.

Figur 14    zeigt schematisch eine Variante eines Primärheizelementes.

Figur 15    zeigt schematisch eine zweite Variante eines Primärheizelementes.

Figur 16    zeigt einen Ausschnitt einer teilweise verschweißten Heizkörperhülle mit eingesetztem Primärheizelement.

Figur 17    zeigt schematisch eine Paraffinbeutelherstellung für einen Heizkörper gemäß einer weiteren Ausführungsform.

Figur 18    zeigt einen Paraffinbeutel zur Verwendung bei einer Heizvorrichtung gemäß einer weiteren Ausführungsform.

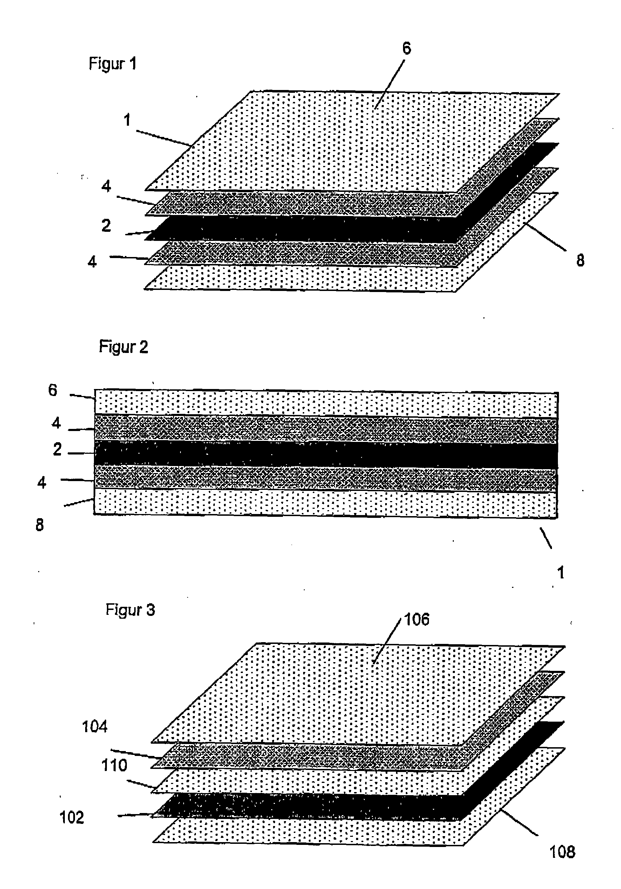

Figur 1 veranschaulicht den Aufbau eines Heizkörpers 1, bei dem ein Primärheizelement 2 zwischen zwei Latentspeichermedien 4 angeordnet ist. Die Latentspeichermedien 4 mit dazwischen angeordnetem Primärheizelement 2 sind eingeschlossen von einer ersten und zweiten Außenschicht 6 bzw. 8. Das Primärheizelement 2 ist in unmittelbarem Kontakt mit dem Latentspeichermedium 4.

Figur 2 zeigt schematisch den Aufbau einer Seitenansicht. Es ist zu beachten, dass Figur 2 keinen Rückschluss auf die Materialdicken zulässt. Vielmehr ist bei der ersten und zweiten Außenschicht davon auszugehen, dass diese im Bereich von unter 0,1 mm liegen, wohingegen das Latentspeichermedium in einer Schicht - beide dargestellten Schichten zusammen - von etwa 5 mm liegen.

Figur 3 zeigt einen alternativen Aufbau, bei dem das Latentwärmespeichermedium 104 durch eine Zwischenschicht 110 von dem Primärheizelement 102 getrennt ist. Das Latentwärmespeichermedium 104 mit dem Primärheizelement 102 und der Zwischenschicht 110 ist von einer ersten Außenschicht 106 und einer zweiten Außenschicht 108 eingeschlossen. Entsprechend ergibt sich zwischen der ersten Außenschicht 106 und der Zwischenschicht 110 eine erste Tasche und zwischen der Zwischenschicht 110 und der zweiten Außenschicht 108 eine zweite Tasche, die das Primärheizelement 102 aufnimmt.

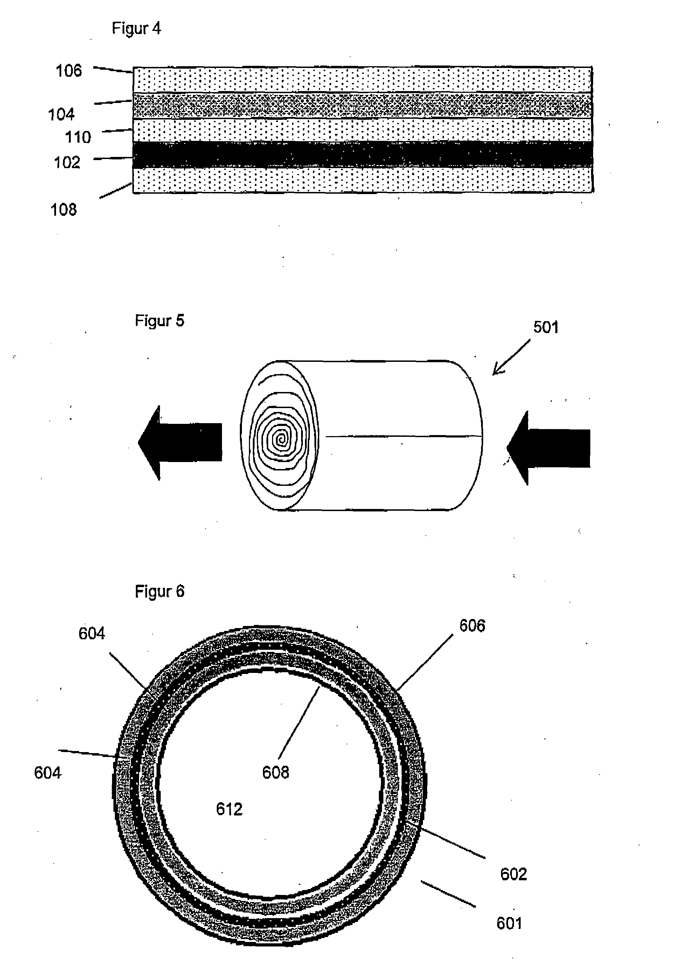

Figur 4 zeigt denselben Aufbau der Figur 3 in einer Seitenansicht zur besseren Veranschaulichung, wobei auch hier zu beachten ist, dass die dargestellten Schichtdicken keinerlei Rückschluss auf die tatsächlichen Schichtdicken zulassen, wie im Zusammenhang mit Figur 2 bereits erläutert wurde.

Figur 5 zeigt schematisch einen Heizkörper 501, der als Rolle einer langen Heizkörperhülle ausgestaltet ist. Zwischen benachbarten äußeren Oberflächen ist dabei ein Abstand vorgesehen, der einen Raum ergibt, der sich im Grunde wie auch der Heizkörper 501 selbst rollen- oder schneckenförmig - bzw. in einer Stirnansicht spiralförmig - erstreckt. Die dargestellten Pfeile sollen veranschaulichen, dass eine Nutzflüssigkeit in Längsrichtung durch den Heizkörper 501 hindurch strömen kann. Ein Strömen in die entgegengesetzte Richtung ist ebenso möglich.

Figur 6 zeigt eine Variante, bei der der Heizkörper 601 in einer Stirnansicht dargestellt ist. Der Heizkörper 601 ist im Wesentlichen zylindrisch ausgeführt. Die Figur 6 zeigt zudem veranschaulichend einen Innenraum 612, durch den Nutzflüssigkeit durch den Heizkörper 601 strömen kann. Ebenso können weitere Heizkörper mit kleinerem Durchmesser in diesen Innenraum 612 eingesetzt werden. Der Heizkörper 601 weist eine erste Außenschicht 606 und eine zweite Außenschicht 608 auf, wobei die zweite Außenschicht 608 zum Innenraum 612 weist. Dazwischen sind zwei Schichten mit einem Latentwärmespeichermedium 604 angeordnet und in der Mitte zwischen den beiden Schichten 604 des Latentwärmespeichermediums ist ein Primärheizelement 602 gezeigt. Das Primärheizelement 602 kann somit das Latentwärmespeichermedium 604 insbesondere mit guter Wärmeübertragungseigenschaft erwärmen. Eine spätere Abgabe der Wärme ist von den beiden Schichten 604 des Latentwärmespeichermediums über die erste bzw. zweite Außenschicht 606 bzw. 608 an eine Nutzflüssigkeit möglich, die bestimmungsgemäß sowohl durch den Innenraum 612 als auch außen an dem Heizkörper 601 entlang fließt.

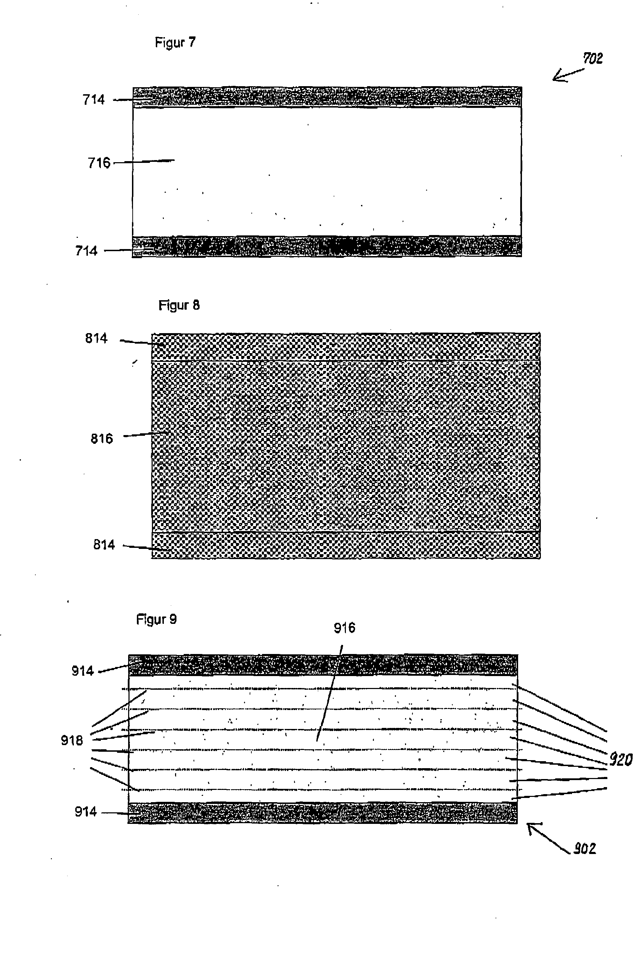

Figur 7 verdeutlicht den Aufbau eines Primärheizelementes 702, das als elektrisches Heizelement 702 ausgeführt ist. Es weist zum Anschluss zwei elektrisch leitende Kupferbahnen 714 auf, zwischen denen eine elektrisch leitfähige Heizfolie 716 angeordnet ist. Oftmals wird vereinfachend auch bei dem gesamten elektrischen Heizelement 702 bereits von einer Heizfolie gesprochen.

Figur 8 zeigt ein elektrisches Heizelement 802 mit zwei elektrisch leitenden Kupferbahnen 814 und dazwischen liegender Heizfolie 816. Figur 8 soll veranschaulichen, dass das gesamte elektrische Heizelement eine Vielzahl von Löchern aufweist, damit bei einer späteren Anordnung in einer Heizkörperhülle eine erste und zweite Außenschicht dort hindurch miteinander verschweißt werden können. Der tatsächlich gezeigte Lochabstand bzw. Aufteilung der Figur 8 soll keine Rückschlüsse über die genaue Größe bzw. Aufteilung bzw. Abstände angeben, sondern lediglich veranschaulichen.

Das Heizfolienmaterial gemäß Figur 8 weist großflächig aufgebrachte Perforationen also Löcher auf. Diese sind im gleichmäßigen Abstand angeordnet.

Auf das Heizfolienmaterial können, wie nachfolgend noch näher erläutert wird, Schweißnähte mit einer Breite von 3 - 5 mm aufgebracht werden. Der so verschweißte Folienschlauch geht durch die Perforation des Heizmaterials hindurch einen Verbund ein. Die damit hergestellte Schweißnaht ist nicht vollständig dicht, für das Unterbinden des Fließens des Phasenwechselmaterials im flüssigen Zustand und insbesondere zum Unterbinden, dass das Material im Schmelzzustand nach oben fließt, allerdings ausreichend. Für weitere Heizkörper wird eine Schweißnaht von mindestens 5 mm vorgeschlagen, um zwei nebeneinander liegende Perforationsreihen verschließen zu können. Der Verschluss der Perforationen erhöht die Dichtheit für den vorgesehenen Einsatz.

Figur 9 zeigt ein beidseitig von einer Heizkörperhülle umschlossenes primäres, elektrisches Heizelement 902. Aus der Figur 9 sind zwei Kupferleitbahnen 914 und eine Heizfolie 916 zu erkennen. Zusätzlich sind Schweißnähte 918 dargestellt, die die Heizkörperhülle in waagerechte Bahnen 920 unterteilt, so dass sich in der Heizkörperhülle entsprechende waagerechte Kammern ergeben.

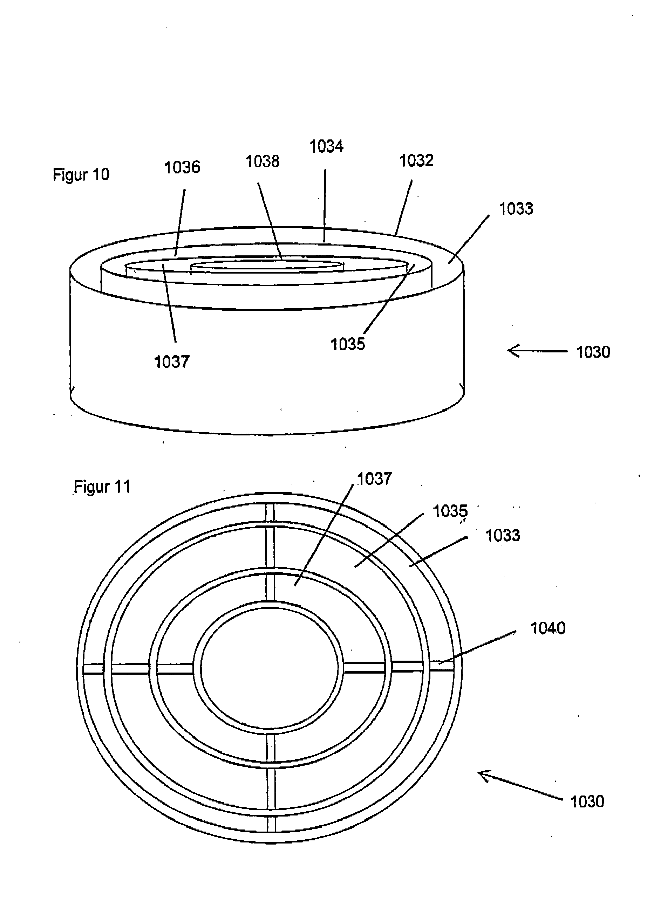

Aus Figur 10 ist schematisch ein Aufnahmeflansch 1030 zu erkennen, der im Wesentlichen vier konzentrische Stege 1032, 1034, 1036 und 1038 aufweist. Der Aufnahmeflansch 1030 ist dabei im Wesentlichen starr und somit sind auch die Stege 1032, 1034, 1036 und 1038 starr und bilden entsprechende Zwischenräume 1033, 1035 und 1037 aus, die in Figur 11 noch deutlicher zu erkennen sind. Aus der Figur 11 sind auch vier Stabilisierungsstreben 1040 zu erkennen, die dem Aufnahmefilansch 1030 eine entsprechende Stabilität verleihen. Der Aufnahmeflansch 1030 ist somit dazu vorbereitet, drei entsprechende rohrförmige Heizkörper in die Zwischenräume 1033, 1035 bzw. 1037 einzusetzen, so dass diese im Wesentlichen drei konzentrische Zylinder ausbilden können.

Gemäß einer weiteren, nicht dargestellten Variante kann ein Aufnahmeflansch so ausgebildet sein, dass er statt eines Gerüstes für mehrere konzentrische rohrförmige Heizkörper eine stabile Aufnahme für einen schnecken- oder rollenförmigen Heizkörper bereitstellt.

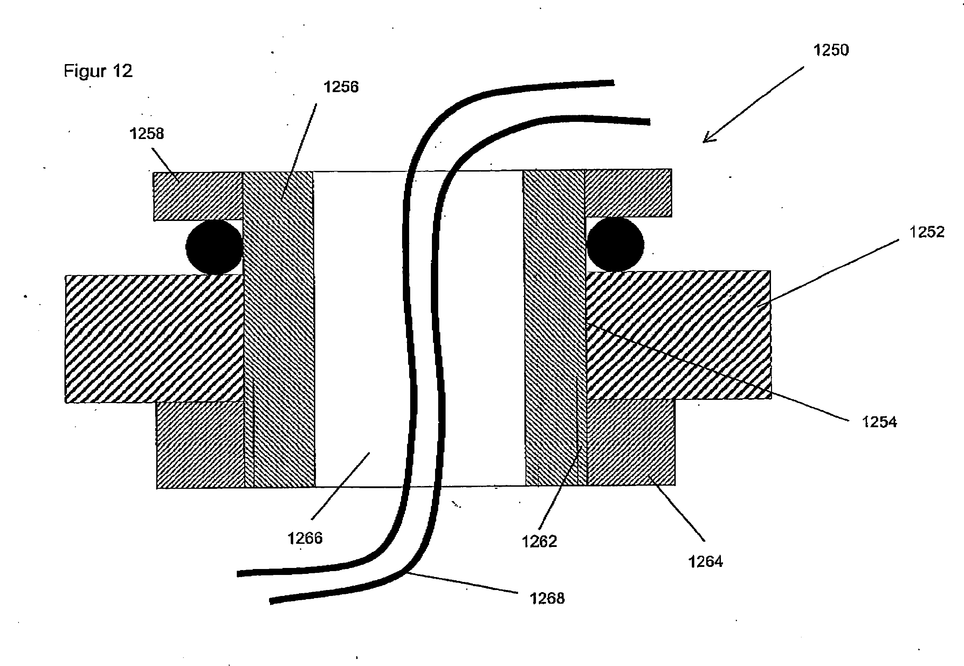

Figur 12 veranschaulicht einen Aufnahmeflansch 1250, der in einen Wasserbehälter einzusetzen ist. Es ist ein Kupferflansch 1252 ausschnittsweise mit einer Bohrung 1254 dargestellt. Der Aufnahmeflansch 1250 weist eine Dichtungsbuchse 1256 auf, die in die Bohrung 1254 eingesetzt ist. Die Dichtungsbuchse 1256 weist einen Ringflansch 1258 auf, mit dem sie zur Abdichtung 1260 an dem Kupferflansch 1252 anliegt. Zum Befestigen und zum Vorspannen der Dichtung weist die Dichtungsbuchse 1256 ein Gewinde 1262 auf, wobei die Befestigung und Verspannung zusammen mit einer Spannmutter 1264 durchgeführt werden kann.

Durch eine Bohrung 1266 in der Dichtungsbuchse 1256 können Anschlussleitungen 1268 abdichtend zu einem Primärheizelement eines Heizkörpers geführt werden. Zum Abdichten der Anschlussleitung 1268 in der Bohrung 1266 wird eine entsprechend abdichtende Verfüllung in die Bohrung 1266 eingeführt.

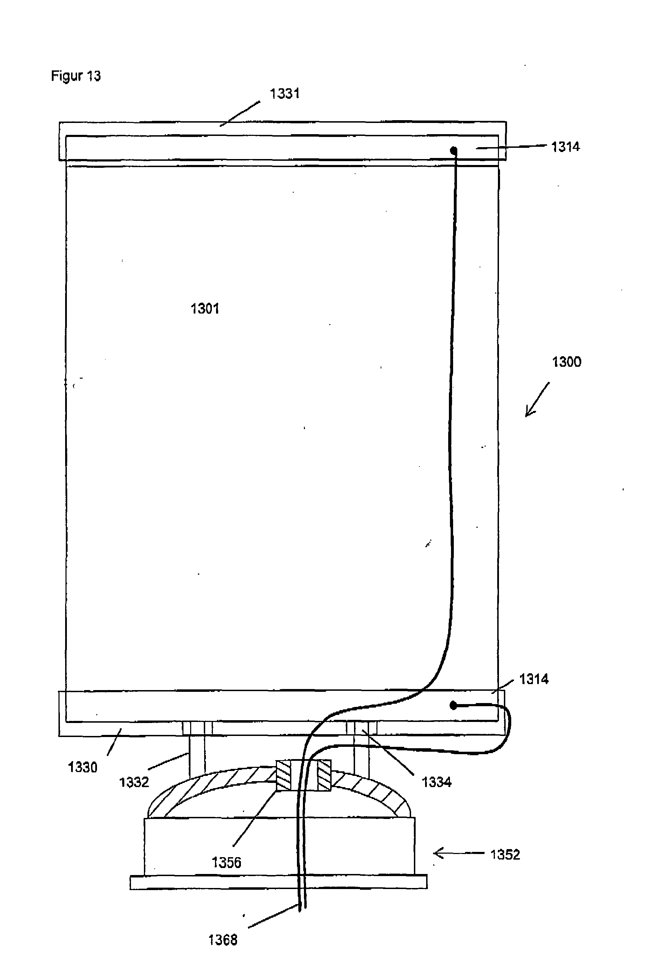

Figur 13 zeigt in einer teilweise geschnittenen Seitenansicht eine Heizvorrichtung 1300 schematisch. Demnach ist ein Heizkörper 1301 dargestellt, der unter anderem ein elektrisches Primärheizelement mit zwei Anschlussbahnen 1314 aufweist. Der Heizkörper 1301 ist in einen Aufnahmefußflansch 1330 und einen Aufnahmedeckelflansch 1331 eingesetzt, um seine Form zu halten.

Der Fußflansch 1330 ist über Abstandhalter 1332 und Befestigungen 1334 an einem Kupferflansch 1352 mit Dichtungsbuchse 1356 für die Kabeldurchführung befestigt. Durch die Dichtungsbuchse 1256 sind Anschlussleitungen 1368 durchgeführt und jeweils zu einer elektrischen Anschlussbahn 1314 geführt, um das elektrische Primärheizelement mit Strom zu versorgen.

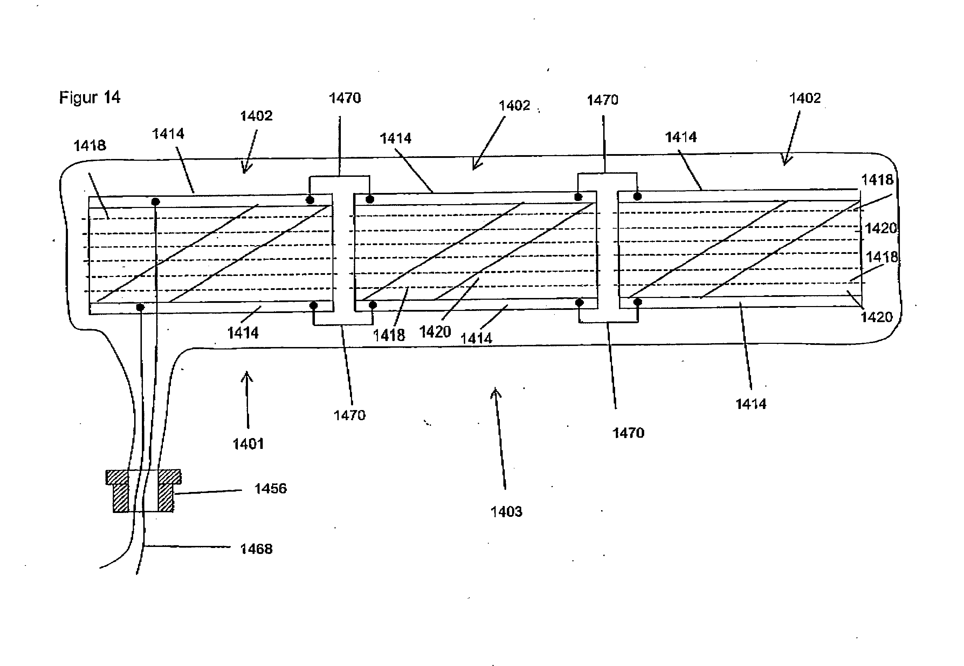

Figur 14 zeigt veranschaulichend drei elektrische Primärheizkörper 1402, die über Verbindungsleitungen 1470 zu einem dreiteiligen Heizelement 1403 zusammengefasst sind. Die Verbindungsleitungen 1470 verbinden dabei die elektrischen Primärheizelemente 1402 mit ihren Anschlussbahnen 1414. Das gesamte dreiteilige elektrische Primärheizelement 1403 ist über Anschlussleitungen 1468 angeschlossen, die veranschaulichend durch eine Dichtungsbuchse 1456 geführt sind.

Die Primärheizelemente 1402 bzw. das dreiteilige elektrische Primärheizelement 1403 ist zudem in eine Heizkörperhülle eingebettet. Es sind gestrichelte Linien zum Andeuten von Schweißnähten 1418 angedeutet, die eine Unterteilung in waagerechte Bahnen 1420 andeuten sollen. Zudem ist der Gesamtheitskörper 1401 schematisch dargestellt, der mit der Dichtungsbuchse 1456 verbunden ist.

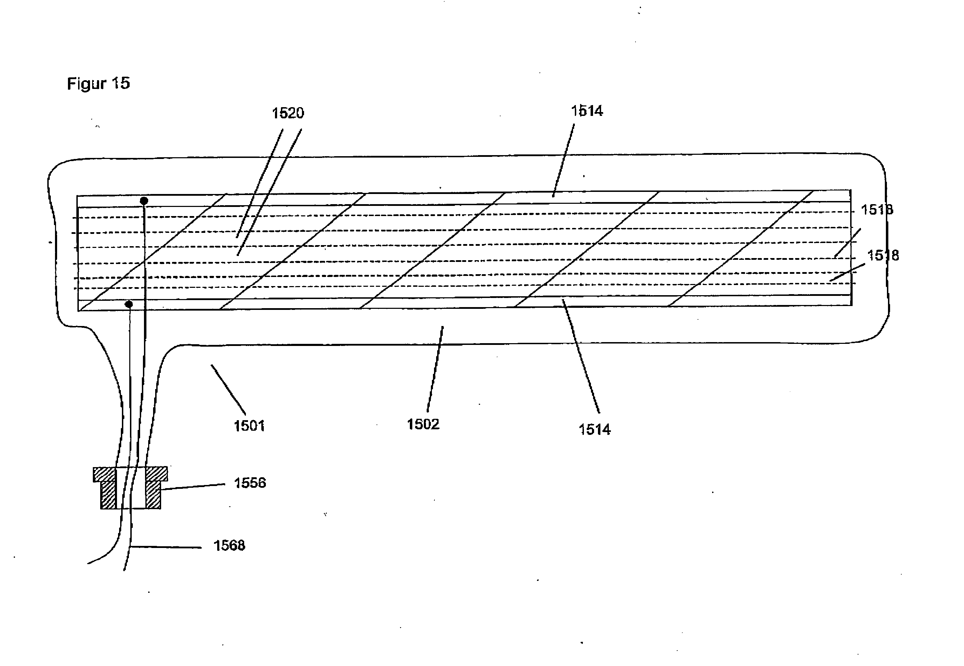

Figur 15 zeigt eine Variante mit einem durchgehenden elektrischen Primärheizelement 1502 mit Anschlussbahnen 1514, Schweißnähten 1518 und sich daraus ergebenden waagerechten Bahnen 1520, sowie Anschlussleitungen 1568 und einer angedeuteten Dichtungsbuchse 1556, mit der ein Heizkörper 1501 verbunden ist.

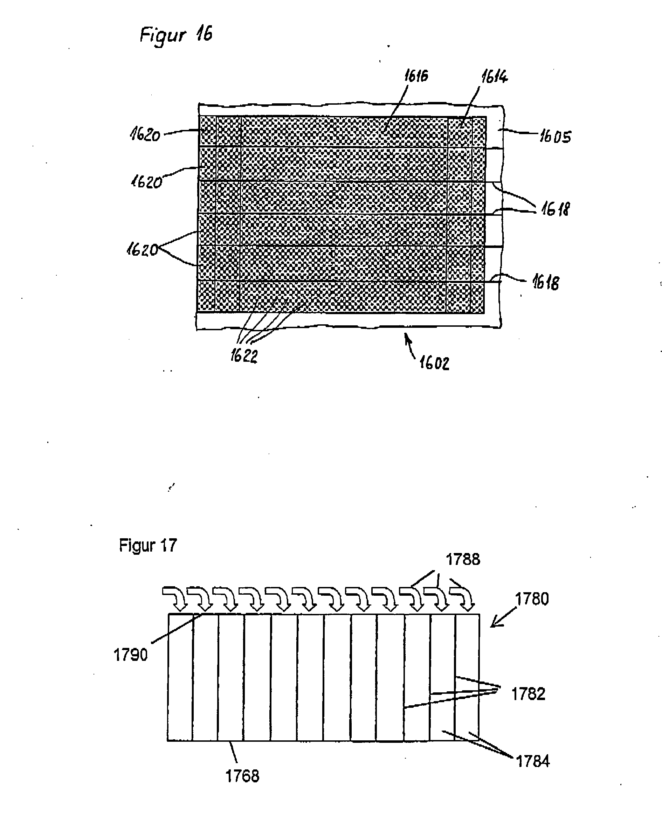

Figur 16 zeigt den Ausschnitt einer Heizkörperhülle 1605 mit darin eingelegtem Primärheizelement 1602, gemäß einem ersten im Rahmen der Erfindung durchgeführten Versuchsaufbau.

Das Primärheizelement 1602 ist als elektrisches Heizelement 1602 mit einer Heizfolie 1616 und mit zwei Kupferbahnen 1614, von denen nur eine in dem Ausschnitt zu sehen ist, zur Kontaktierung versehen. Die Heizkörperhülle 1605 weist mehrere Schweißnähte 1618 auf, von denen zwei in dem Ausschnitt zu erkennen sind. Im Bereich der Heizfolie 1616 reichen die Schweißnähte durch Perforationsöffnungen 1622 hindurch, um eine erste und zweite Außenschicht, die im Wesentlichen die Heizkörperhülle 1605 bilden, jedenfalls im Bereich dieser Perforationsöffnungen 1622 miteinander zu verschweißen. Zwischen den Schweißnähten 1618 bilden sich Bahnen 1620 aus, die in der bestimmungsgemäßen Verwendung waagerecht angeordnet sind, um hierin das Latentwärmespeichermedium zu halten. Die Schweißnähte 2018 verhindern dann also ein größeres Absinken des Latentwärmespeichermediums. Es ist noch zu beachten, dass bei der zu Testzwecken hergestellten Heizkörperhülle, 1605 mit dem darin angeordneten Primärheizelement 1602 die Schweißnähte 1618 quer zur Kupferbahn 1614 verlaufen. Tatsächlich wird aber vorgeschlagen, dass die Schweißnähte und damit die stehenden waagerechten Bahnen parallel zu den Kupferbahnen bzw. anderen Anschlussbahnen verlaufen. Dies wird vorgeschlagen, weil ein Schweißen durch die Perforationen im Bereich der Kupferbahnen oder anderen Anschlussbahnen schlecht möglich ist. Durch eine parallele Führung der Schweißnähte und Kupfer- oder Anschlussbahnen können die Kupfer- oder Anschlussbahnen in einer waagerechten Bahn aufgenommen sein und ein Verschweißen einer ersten und zweiten Außenschicht wird im Grunde nur im Bereich der Heizfolie, möglichst aber nicht im Bereich der Kupfer- oder anderen Kontaktbahn durchgeführt.

Figur 17 zeigt einen Folienschlauch 1780 der mittels Unterteilungsnähten 1782 in längliche Aufnahmeabschnitte 1784 unterteilt ist. Die Schlauchfolie 1780 weist bereits eine Folienkante bzw. Folienfalte 1786 auf, so dass die Aufnahmeabschnitte 1784 jeweils durch zwei Unterteilungsnähte 1782 zusammen mit einem Teil der Folienkante 1786 gefertigt werden und jeweils eine Hohlkammer ausbilden, deren Befüllung mit dem entsprechenden Phasenwechselmaterial wie Paraffin durch die Befüllungspfeile 1788 angedeutet ist. Die länglichen Aufnahmeabschnitte 1782 sind vor der Befüllung grundsätzlich flach ausgebildet und nehmen durch eine entsprechende Befüllung im Wesentlichen eine rohr- bzw. röhrchenförmige Ausgestaltung an. Die länglichen Aufnahmeabschnitte 1784 werden gemäß der in Figur 17 angedeuteten Ausführungsform auch als Paraffinbeutel bezeichnet. Nach dem Befüllen gemäß der Befüllungspfeile 1788 kann im Bereich der durchgeführten Befüllung zum Verschließen eine Verschlussnaht 1790 angeordnet werden. Der so modifizierte und befüllte Folienschlauch 1780 kann dann mit einem Heizkörper versehen werden, um somit eine Heizvorrichtung aufzubauen.

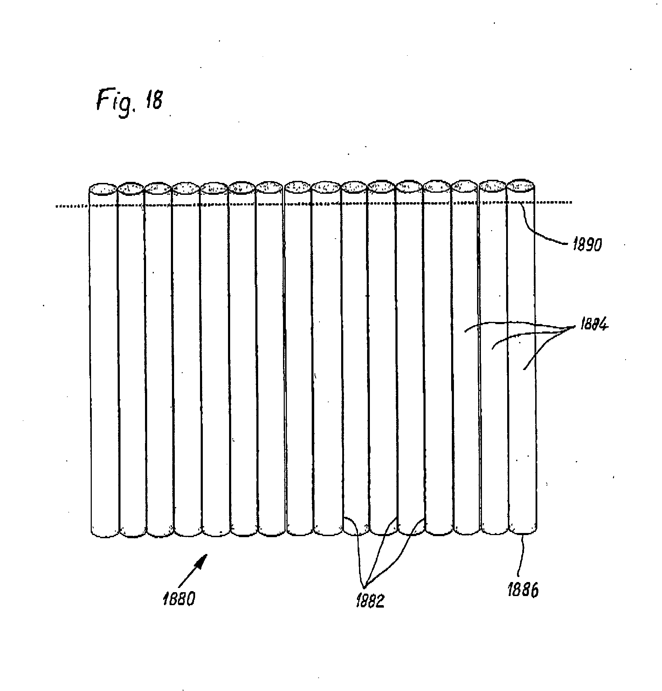

Figur 18 zeigt einen Folienschlauch 1880, der mittels Unterteilungsnähten 1882 in mehrere längliche Aufnahmeabschnitte 1884 unterteilt ist, die mit Paraffin als Phasenwechselmaterial gefüllt sind. Die länglichen Aufnahmeabschnitte 1884 sind dabei bereits mit einer Abschlussnaht 1890 verschlossen, die einer Folienkante bzw. Folienfalte 1886 gegenüberliegt.

Nachfolgend werden noch einige Details zu einigen Ausführungsformen genannt, die auch - soweit technisch ausführbar - mit allen Ausführungsformen kombiniert werden können.

Vorzugsweise ist das Primärheizelement ein Flächenheizelement, das eine elektrisch leitende Folie mit gleichmäßiger Wärmeabgabe aufweist. Anstelle der elektrisch leitenden Folie könnte auch ein Sandwichblech verwendet werden, durch das ein Wärmeträgermedium fließt.

Der Verbundheizkörper gemäß einer Ausführungsform basiert auf der Integration von Phasenwechselmaterial auf Paraffinbasis in einer Kunststoff-Schlauchfolie (Endlosfolienschlauch mit offenen Stirnseiten) und der thermischen Anbindung an eine thermisch leitfähige Heizfolie (auch als Heizvlies bezeichnet). Die eingesetzte Heizfolie verfügt an den jeweiligen Stirnseiten über Kupferleitbahnen, die einen elektrischen Kontakt und damit das gezielte Aufheizen durch Anlegen einer elektrischen Spannung ermöglichen. Der Heizkörper soll in einen bereits bekannten Kunststoffbehälter eines Warmwasserkleinspeichers integriert werden und in seiner Funktion den bisher verwendeten Kupferrohrheizkörper vollständig ersetzen. Für eine Beschleunigung der Wärmeübertragungsprozesse wird eine große Übertragungsfläche sowie eine geringe Materialstärke des Paraffin geschaffen. Um weiterhin die Reaktionsträgheit des PCM zu verringern, wird ein möglichst direkter Kontakt des PCM mit der Heizfolie geschaffen. Dadurch ist gewährleistet, dass die thermische Energie im Vorfeld - beim Heizen mit dem Primärheizelement - das Aufschmelzen des Paraffins hervorruft und anschließend das Speicherwasser erwärmt.

Die folgenden Materialien werden gemäß einer Ausführungsform verwendet:

- Folienmaterial: Schlauchfolie HD-PE, Stärke 70 $\mu$m, Breite 250 mm

- Heizfolie perforiert: Flächenmasse 80 g/m$^2$, spezifischer Flächenwiderstand 24 Ohm/sq

- Heizfolie unperforiert: Flächenmasse 150 g/m$^2$, spezifischer Widerstand 15 Ohm/sq

- Phasenwechselmatehal: Paraffin Rubitherm RT 65, Schmelzpunkt 65° C, in Granulatform.

Die Einheit des Flächenwiderstandes "Ohm/sq" ist ein auf die Fläche der Heizfolie bezogener Widerstandswert, dessen Einheit auf die Fläche bezogen ist, aber die Einheit Ohm aufweist.

Die Einheit ist Ohm/sq bzw. Ohm pro square, also Ohm pro Flächeneinheit, wobei die Flächeneinheit dimensionslos ist.

Aus diesem spezifischen Flächenwiderstand läßt sich der tatsächliche Bauteilwiderstand errechnen.

$$R = Rs \times (L / B)$$

wobei

R = Bauteilwiderstand in Ohm

Rs = spezifischer Flächenwiderstand

L = Innenabstand der Kupferkontaktbahnen

B = Bauteilbreite

Umgekehrt kann aus einem gemessenen Bauteil über die Formel auch auf den Rs zurückgerechnet werden. Bei einem quadratischen Bauteil, bei dem L = B ist, dann auch R = Rs. Dies kann für eine einfache, schnelle und sichere Bestimmung des Rs benutzt werden.

Da L und B mit einer Längendimension behaftet sind, die sich in der Gleichung herauskürzt, darf Rs lediglich die Einheit Ohm tragen. Die Bezeichnung /sq ist dazu da, auch in der Einheit zwischen Bauteilwiderstand und spezifischen Flächenwiderstand unterscheiden zu können.

Im vorliegenden Beispiel liegt somit ein flächiges, im Wesentlichen rechtwinkliges Heizelement zugrunde, das an zwei parallelen Begrenzungskanten mit je einer Kupferkontaktbahn versehen ist und dazwischen ein Halbleitermaterial angeordnet ist.

Die maximale Dicke des eingebrachten Paraffins gemäß einer Ausführungsform wurde auf 5 mm festgelegt. In Verbindung mit dem direkten Kontakt zur Heizfolie kann die Wärmeübertragungsgeschwindigkeit erhöht und die Reaktionsträgheit des Materials reduziert werden. Zu berücksichtigen bei der Dimensionierung des Verbundheizkörpers ist weiterhin das Fließverhalten des Phasenwechselmaterials. Dieses wird durch eine Rückhaltevorrichtung begrenzt werden, da das flüssige Material bei großflächiger Verteilung in den unteren Teil des aufgestellten Verbundheizkörpers gelangt und dort beim Erstarren eine Materialanhäufung bildet. Durch eine Materialanhäufung ist wie bereits erläutert der Wärmeübergang erheblich verschlechtert, was - bedingt durch die geringe thermische Leitfähigkeit des Materials - zu einem Wärmestau und dadurch zu einer Überhitzung des Heizvlies bzw. der Heizfolie führen kann. Daher wird die Schlauchfolie vor dem Einbringen des Phasenwechselmaterials mit horizontalen Bahnen versehen, mit deren Hilfe die Problematik erheblich reduziert werden kann. Diese Bahnen werden mit einem speziellen Folienschweißgerät aufgebracht. Dadurch entstehen Kammern, deren jeweilige Breite durch die Schweißung definiert werden kann.

Es haben sich Breiten von 20 mm bis maximal 30 mm als sinnvoll herausgestellt. Die Breite der Schweißnaht sollte in Größenordnungen zwischen 3 und 5 mm liegen.

Der Heizkörper kann gemäß einer Variante als zusammenhängende Heizschnecke aus einem Bauteil gebildet sein. Der Vorteil an dieser Anordnung ist, dass die elektrische Kontaktierung (Lötstelle) an lediglich einem Punkt auf der jeweiligen Kupferleitbahn realisiert zu werden braucht. Die Heizschnecke ist in jedem Fall mit einer Stützkonstruktion, wie einem Drahtgeflecht oder Ähnlichem, zu versehen, um im Bereich der Schmelztemperatur die Schneckenform mit den vorgegebenen Abständen zu gewährleisten.

Gemäß einer Variante ist die Anordnung in konzentrischen Kreisen mit mehreren Teilen ausgebildet, die mit vorgegebenem Abstand ineinander gesetzt werden und mit einem Drahtgeflecht fixiert werden. Dies erhöht allerdings den Aufwand der elektrischen Kontaktstellen zu den jeweiligen Kupferleitbahnen.

Es werden nachfolgend zwei weitere Ausführungsformen beschrieben. Die Materialien sind abgesehen von dem verwendeten Heizfolienmaterial in beiden Ausführungsformen identisch.

Verwendet wird bei einer Ausführungsform perforiertes Heizvlies, welches über die gesamte Fläche gleichmäßig mit gestanzten Löchern versehen ist. Der Abstand dieser Ausstanzungen beträgt bei dem verwendeten Material 3,5 mm, kann aber beliebig variiert werden. Auch der Durchmesser der Perforationen ist nicht festgelegt. Der Vorteil des perforierten Heizvlieses besteht darin, dass es mit der Folie verschweißt und dadurch direkt in den Folienschlauch integriert werden kann. Dies ermöglicht einen direkten Kontakt der Heizfolie mit dem Phasenwechselmaterial. Bei der Herstellung wird das Heizvlies in einen noch unverschweißten Folienschlauch gegeben und anschließend die horizontalen Bahnen durch Verschweißen hergestellt, wie oben im Zusammenhang mit der Figur 9 erläutert wurde. Durch die Perforation hindurch verschweißt sich die Folie zu einem dichten Verbund.

Nach dem Verschweißen wird das Phasenwechselmaterial in geschmolzenem Zustand in die einzelnen Bahnen eingebracht. Anschließend wird der Folienschlauch an beiden Enden evakuiert und verschlossen. Das Evakuieren dient dazu, restliche Luft zu entfernen und einen möglichst dichten Verbund der Materialien herzustellen. Hierdurch soll ein möglichst optimaler Wärmeübergang von der Heizfolie durch das Phasenwechselmaterial an das zu erhitzende Wasser erreicht werden. Abschließend erfolgt das Aufrollen der bis dahin noch flachen Konstruktion zu einer Schnecke. Das in der Schmelzphase befindliche Phasenwechselmaterial lässt sich mit dem Verbundheizkörper am leichtesten in die vorgesehene Rollen- bzw. Schneckenform bringen.

Gemäß einer weiteren Ausführungsform wird unperforierte Heizfolie verwendet. Um dennoch horizontale Bahnen in dem Folienschlauch vorsehen zu können, wird die Heizfolie nicht in direkten Kontakt mit dem Phasenwechselmaterial gebracht. Hierfür ist ein zweiter Folienbeutel vorgesehen, der mit dem anderen möglichst großflächig verklebt oder verschweißt wird. Wichtig ist hierbei ein möglichst direkter Kontakt über die gesamte Fläche, um Lufteinschlüsse zu vermeiden und den Wärmeübergang zu beeinträchtigen. Zunächst werden die Bahnen geschweißt, wie bereits im Zusammenhang mit der Figur 9 beschrieben wurde, anschließend wird das Phasenwechselmaterial eingebracht, was wie bei der zuvor beschriebenen Ausführungsform erfolgen kann. Ein zweiter Folienschlauch wird ohne aufgeschweißte Bahnen hinter den ersten geklebt und das Heizvlies eingelegt. Anschließend werden beide Folienschläuche evakuiert, um die enthaltene Luft zu entfernen und einen dichten Verbund zu schaffen. Nach dem Evakuieren werden beide Folien am jeweiligen Ende verschlossen.

Eine Umströmung des Verbundheizkörpers mit Kaltwasser, insbesondere Frischwasser kann über ein Einströmrohr in einem Behälter erfolgen, in den der Verbundheizkörper anzuordnen ist. Konkret kann das Frischwasser durch das Einströmrohr von einer Unterseite des Behälters erfolgen. Damit eine Durchströmung an beiden Enden des Heizkörpers sichergestellt ist, wird ein Siebeinsatz mit einer Lochblechkonstruktion verwendet, der zum einen die Form fixiert, zum anderen die Durchströmung ermöglicht.

**Patentansprüche**

1. Heizvorrichtung zum Erwärmen einer Nutzflüssigkeit, insbesondere Wasser, mit wenigstens einem Heizkörper (1) und der wenigstens einen Heizkörper (1) umfasst:

   - eine geschlossene, flüssigkeitsdichte Heizkörperhülle, mit einer ersten und einer zweiten Außenschicht (6, 8), die eine erste bzw. zweite Hüllenoberfläche zum Austauschen von Wärme zwischen dem Heizkörper (1) und der Nutzflüssigkeit aufweist,
   - ein in der Heizkörperhülle zwischen der ersten und der zweiten Außenschicht (6, 8) aufgenommenes Latentwärmespeichermedium (4) und
   - ein in der Heizkörperhülle zwischen der ersten und der zweiten Außenschicht (6, 8) aufgenommenes Primärheizelement (2) zum Erwärmen des Latentwärmespeichermediums,

   wobei die Außenschichten (6, 8) und die Hüllenoberflächen dazu vorbereitet sind, mit der Nutzflüssigkeit zum Austauschen von Wärme in Kontakt zu kommen.

2. Heizvorrichtung nach Anspruch 1, **dadurch gekennzeichnet, dass** der wenigstens eine Heizkörper (1) als flaches Element, insbesondere als Heizkörperfolie ausgeführt ist und/oder die erste und zweite Hüllenoberfläche einen mittleren Abstand zu einander aufweisen und die Quadratwurzel der Größe der ersten und/oder der zweiten Hüllenoberfläche des Heizkörpers (1) wenigstens doppelt so groß, insbesondere wenigstens fünfmal so groß, weiter vorzugsweise wenigstens zwanzigmal so groß ist wie der mittlere Abstand der ersten und zweiten Hüllertoberfiäche.

3. Heizvorrichtung nach Anspruch 1 oder 2, **dadurch gekennzeichnet, dass** mehrere Heizkörper (1) und/oder mehrere Heizkörperabschnitte so zueinander angeordnet sind, dass sie wenigstens einen Zwischenraum ausbilden, um der Nutzflüssigkeit zu ermöglichen, durch diesen wenigstens einen Zwischenraum hindurch zu strömen.

4. Heizvorrichtung nach einem der vorstehenden Ansprüche, **dadurch gekennzeichnet, dass** wenigstens ein Heizkörper (1) um eine Längsachse in eine Rollenform mit mehreren Wicklungen gewickelt ist, wobei die einzelnen Wicklungen als zu einander beabstandete Lagen ausgebildet sind, so dass der Nutzflüssigkeit ermöglicht wird, zwischen den Lagen zu strömen.

5. Heizvorrichtung nach einem der vorstehenden Ansprüche, **gekennzeichnet durch** mehrere, rohrförmige, so ineinander gesetzte Heizköper (1), dass der Nutzflüssigkeit ermöglicht wird, zwischen den Heizköpern (1) zu strömen.

6. Heizvorrichtung nach einem der vorstehenden Ansprüche, **dadurch gekennzeichnet dass** das Latentwärmespeichermedium (4) mit Materialien mit guter thermischer Leitfähigkeit versetzt ist, vorzugsweise mit einem Metall, weiter bevorzugt mit Kupferpulver.

7. Heizvorrichtung nach einem der vorstehenden Ansprüche, **dadurch gekennzeichnet, dass** die Heizköperhülle in mehrere, jeweils einen Teil des Latentwärmespeichermediums (4) aufnehmende Kammern unterteilt ist, insbesondere unter Verwendung einer oder mehrerer Schweißnähte (918) zum Verbinden der ersten und zweiten Außenschicht im Bereich der Schweißnähte (918).

8. Heizvorrichtung nach einem der vorstehenden Ansprüche, **dadurch gekennzeichnet, dass** das wenigstens eine Primärheizelement (2) Aussparungen, insbesondere Löcher aufweist, und die erste und die zweite Außenschicht (6, 8) durch diese Aussparungen hindurch miteinander verschweißt sind.

9. Heizvorrichtung nach einem der vorstehenden Ansprüche, **dadurch gekennzeichnet, dass** das Primärheizelement (2) in der Heizkörperhülle in wenigstens einer separaten Kammer aufgenommen ist, und/oder im bestimmungsgemäßen Gebrauch in unmittelbarem Kontakt mit dem Latentwärmespeichermedium (4) steht.

10. Heizvorrichtung nach einem der vorstehenden Ansprüche, **dadurch gekennzeichnet, dass** die Heizkörperhülle zum Aufnehmen des Latentwärmespeichermediums (4) in mehrere längliche, insbesondere röhrenförmige Aufnahmeabschnitte (1784) unterteilt ist, die insbesondere in einem flachen, unbefüllten Zustand etwa eine innere Breite von 10 bis 50 mm, vorzugsweise 20 bis 40 mm, und insbesondere von etwa 30 mm aufweisen.

11. Heizvorrichtung nach einem der vorstehenden Ansprüche, weiter umfassend einen Flansch (1250) zum Befestigen des wenigstens einen Heizkörpers (1), wobei der Flansch (1250) wenigstens ein Anschlussmittel aufweist zum funktionalen Verbinden des Primärheizelements (2) mit einer Energieversorgung, insbesondere einer elektrischen Energiequelle, und wobei der Flansch (1250) wenigstens ein Befestigungsmittel aufweist zum Befestigen der Heizvorrichtung mit einem Wasserbehälter.

12. Warmwasserbereiter mit einem Wasserbehälter zum Aufnehmen zu erwärmenden und/oder warmzuhaltenden Wassers und einer Heizvorrichtung nach einem der vorstehenden Ansprüche.

13. Verbindungsflansch zur Verwendung mit einer Heizvorrichtung nach einem der Ansprüche 1-11, umfassend

   - wenigstens ein Aufnahmemittel zum Aufnehmen des wenigstens einen Heizkörpers (1),
   - wenigstens einen funktionalen Anschluss, insbesondere elektrischen Anschluss, zum Verbinden des Primärheizelementes (2) mit einer Energiequelle, und
   - wenigstens ein Befestigungsmittel zum Befestigen mit einem Warmwasserbehälter.

14. Verfahren zum Herstellen einer Heizvorrichtung gemäß einem der Ansprüche 1-11, umfassend die Schritte:

   - Bereitstellen einer flüssigkeitsdichten, flachen Heizkörperhülle,
   - Einfüllen eines Latentwärmespeichermediums (4) in eine Kammer der Heizkörperhülle,
   - Verschließen der Kammer der Heizkörperhülle und
   - flächiges Verbinden einer Seite der Kammer der Heizkörperhülle mit einem Primärheizelement (2).

15. Verfahren zum Herstellen einer Heizvorrichtung gemäß einem der Ansprüche 1-10, umfassend die Schritte:

- Bereitstellen einer flüssigkeitsdichten, flachen Heizkörperhülle mit einer ersten und einer zweiten Außenschicht (6, 8),
- Einsetzen eines Primärheizelementes in die Heizkörperhülle zwischen die erste und zweite Außenschicht (6, 8),
- Einfüllen eines Latentwärmespeichermediums (4) in die Heizkörperhülle zwischen die erste und zweite Außenschicht (6, 8) in unmittelbarem Kontakt mit dem Primärheizelement (2), insbesondere beidseitig von dem Primärheizelement (2) und
- Verschließen der Heizkörperhülle, wobei Anschlüsse zum Primärheizelement (2) herausgeführt sind.

Figur 1

Figur 2

Figur 3

Figur 4

106

104

110

102

108

Figur 5

501

Figur 6

604

606

604

608

612

602

601

Figur 7

714 —

716 —

714 —

702

Figur 8

814 —

816 —

814 —

Figur 9

916

914 —

918 —

914 —

920

902

Figur 10

Figur 11

Figur 12

1256

1258

1250

1252

1254

1266

1262

1264

1268

EP 2 177 839 A2

Figur 13

Figur 14

Figur 15

Figur 16

Figur 17

Fig. 18

1890

1884

1880

1882

1886